(19) Europäisches Patentamt
European Patent Office
Office européen des brevets

(11) **EP 3 196 173 A1**

(12) **EUROPEAN PATENT APPLICATION**

(43) Date of publication:
**26.07.2017 Bulletin 2017/30**

(51) Int Cl.:
*C03C 1/00* (2006.01)    *C03C 3/083* (2006.01)
*C03C 3/085* (2006.01)    *C03C 3/091* (2006.01)
*C03C 3/093* (2006.01)    *C03C 8/02* (2006.01)
*C03C 8/04* (2006.01)    *C03C 10/00* (2006.01)
*C03C 11/00* (2006.01)    *C03B 19/08* (2006.01)
*C03B 32/02* (2006.01)    *E04C 2/54* (2006.01)

(21) Application number: **16192303.2**

(22) Date of filing: **05.10.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **25.01.2016 US 201615005022**

(71) Applicants:
• **King Abdulaziz City for Science and Technology**
  **11442 Riyadh (SA)**
• **University of Padova**
  **35122 Pado Padova (IT)**

(72) Inventors:
• **BINHUSSAIN, Mohammed**
  **11442 RIYADH (SA)**

• **AL-TALASI, Hamad**
  **11442 RIYADH (SA)**
• **MARANGONI, Mauro**
  **35131 PADOVA (IT)**
• **BERNARDO, Enrico**
  **35131 PADOVA (IT)**
• **COLOMBOB, Paolo**
  **35131 PADOVA (IT)**
• **BINMAJED, Majed**
  **11442 RIYADH (SA)**

(74) Representative: **Peguet, Wilfried et al**
**Ipsilon**
**Le Centralis**
**63, avenue du Général Leclerc**
**92340 Bourg-la-Reine (FR)**

(54) **A WHITE SINTERED GLASS-CERAMIC TILE AND METHOD OF PREPARING THE SAME**

(57) The invention provides a white sintered glass-ceramic tile and a method for preparing the white sintered glass-ceramic tile. The white sintered glass-ceramic tile is a single fired tile with a glazed glass-ceramic layer and a porous glass-ceramic layer, wherein each layer is prepared using same starting raw materials. The method includes milling the starting raw materials to obtain a homogenous mixture. The homogenous mixture is melted and poured in water to obtain glass frits. The glass frits are milled and thereafter, sieved to obtain glass frit powder with particle size of below 100 micron ($\mu$m). A mixture of the glass frit powder and one or more foaming agents is cold pressed to form a porous glass-ceramic layer. Thereafter, the glass frit powder is deposited on the porous glass-ceramic layer to obtain a glazed glass-ceramic layer. Finally, both the layers are fired together.

FIG. 1

**Description**

**FIELD OF THE INVENTION**

The invention generally relates to the field of glass-ceramic tiles. More specifically, the invention relates to white sintered glass-ceramic tiles with has high reflectivity and low thermal conductivity.

**BACKGROUND OF THE INVENTION**

Generally, tiles used in buildings of arid environment are required to have cooling features. The improvement of the thermal efficiency of buildings represents a challenge concerning the reduction of the overall costs for cooling. Although highly reflective coatings prevent heat absorption from the incoming sunlight, the body of conventional ceramic tiles warms up to environmental temperature through heat conduction and convection.

Thus, there is a need for an improved building material with efficient and cost effective cooling features.

**BRIEF DESCRIPTION OF THE FIGURES**

The accompanying figures together with the detailed description below forms part of the specification and serves to further illustrate various embodiments and to explain various principles and advantages all in accordance with the invention.

FIG. 1 illustrates a flow diagram of a method for preparing a white sintered glass-ceramic tile in accordance with the embodiments of the invention.

FIG. 2a is a schematic representation of a white sintered glass-ceramic tile with a highly reflective coating deposited on a porous layer possessing a low thermal conductivity.

FIG. 2b represents a spectrum of the solar radiation on the earth.

FIG. 3 represents a dilatometric plot, for a rod, and Differential Thermal Analysis (DTA) plots, for fine powders (below 90 $\mu$m) and coarse fragments (above 2-3 mm) of NP glass.

FIG. 4 represents a graph for total, open and close porosity of NP glass ceramic samples foamed using different foaming agents.

FIG. 5 represents X-Ray Powder Diffraction (XRD) patterns of a white sintered glass ceramic tile.

FIG. 6 represents Scanning Electron Microscopy with Energy Dispersive X-ray Spectroscopy (SEM-EDS) microanalysis of a dense (glazed) NP glass sample after firing at a temperature of 950°C for a time period of 30 minutes.

FIG. 7a depicts BEI a top view of the dense (glazed) glass ceramics.

FIG. 7b depicts a cross section of the glaze applied to a foamed layer in sample $G_3SN_1$.

FIG. 7c depicts details of the microstructure of sample SN.

FIG. 7d depicts details of the microstructure of a foamed layer of sample $G_3SN_1$.

FIGS. 8a and 8d depict BEI at low magnification used to evaluate the cell size distribution of SN and G3SN1 porous samples.

FIGS. 8b and 8e depict outlines of the cells after image processing.

FIGS. 8c and 8f is a histogram plot of the cell size and Lorentzian fit to evaluate the cell size distribution

FIG. 9a represents a graph with thermal conductivity at room temperature as a function of the pore volume fraction.

FIG. 9b represents UV-Vis-NIR spectra for dense (glazed) and foamed SN samples, and AM 1.5 Global solar irradiance according to the ASTM G173 standard.

## DETAILED DESCRIPTION OF THE INVENTION

Before describing in detail embodiments that are in accordance with the invention, it should be observed that the embodiments reside primarily in a white sintered glass-ceramic tile and a method for preparing the white sintered glass-ceramic tile.

In this document, terms "comprises," "comprising," or any other variation thereof, are intended to cover a non-exclusive inclusion, such that a process, method, or composition that comprises a list of elements does not include only those elements but may include other elements not expressly listed or inherent to such process, method, or composition. An element proceeded by "comprises ...a" does not, without more constraints, preclude the existence of additional identical elements in the process, method, or composition that comprises the element.

Generally speaking, pursuant to various embodiments, the invention provides a white sintered glass-ceramic tile and a method for preparing the white sintered glass-ceramic tile. The white sintered glass-ceramic tile includes a glazed glass-ceramic layer and a porous glass-ceramic layer. The white sintered glass-ceramic tile is a single fired tile where each layer is prepared using same starting raw materials.

In an embodiment, the starting raw materials include about 13 weight percentage (wt%) to about 17 wt% of clay, about 8 wt% to about 12 wt% of cullet, about 28 wt% to about 32 wt% of limestone, about 33 wt% to about 37 wt% of silica and about 8 wt% to about 12 wt% pure chemicals. The resulting oxide composition includes about 6 wt% to about 10 wt% of aluminum oxide ($Al_2O_3$), about 0 wt% to about 3 wt% of barium oxide ($B_2O_3$), about 18 wt% to about 22 wt% of calcium oxide (CaO), about 0 wt% to about 5 wt% of potassium oxide ($K_2O$), about 0 wt% to about 4 wt% Magnesium oxide (MgO), about 0 wt% to about 5 wt% Sodium oxide ($Na_2O$), about 53 wt% to about 60 wt% of Silicon dioxide ($SiO_2$), about 5 wt% to about 9 wt% of Zinc oxide (ZnO).

In another embodiment, the starting raw materials include about 0 wt% to about 4 wt% of alumina, about 8 wt% to about 14 wt% of cullet, about 15 wt% to about 24 wt% of feldspar, about 19 wt% to about 32 wt% of limestone, about 5 wt% to about 14 wt% of magnesia, about 25 wt% to about 31 wt% of silica, and about 3 wt% to about 7wt% of zinc oxide. The resulting oxide composition includes about 3 wt% to about 10 wt% of Al203, about 12 wt% to about 22 wt% of CaO, about 0 wt% to about 4 wt% of $K_2O$, about 6 wt% to about 15 wt% of MgO, about 0 wt% to about 5 wt% of $Na_2O$, about 52 wt% to about 60 wt% of $SiO_2$, and about 4 wt% to 8 wt% of ZnO.

In yet another embodiment, the starting raw materials include about 14.8 weight percentage (wt%) of clay, about 9.9 wt% of cullet, about 29.6 wt% of limestone, about 34.5 wt% of silica and about 11.4 pure chemicals. The resulting oxide composition is about 7.7 wt % of $Al_2O_3$, about 1.3 wt % of $B_2O_3$, about 0.0 wt % of BaO, about 20.3 wt % of CaO, about 0.4 wt % of $Fe_2O_3$, about 2.5 wt % of $K_2O$, about 0.7 wt % of MgO, about 2.5 wt % of $Na_2O$, about 57.4 wt % of $SiO_2$, about 0.7 wt % of $TiO_2$, and about 6.5 wt % of ZnO.

The method for preparing the white sintered glass-ceramic tile includes milling the starting raw materials to obtain a homogenous mixture. The homogenous mixture is melted to obtain a melt which is poured in water to obtain glass frits. The glass frits are milled to obtain homogenized glass frits which are sieved to obtain glass frit powder with particle size of below 100 micron ($\mu$m). A mixture of the glass frit powder and one or more foaming agents is cold pressed to form a porous glass-ceramic layer. Thereafter, the glass frit powder is deposited on the porous glass-ceramic layer to obtain a glazed glass-ceramic layer. Finally, both the porous glass-ceramic layer and the glazed glass-ceramic layer are fired together.

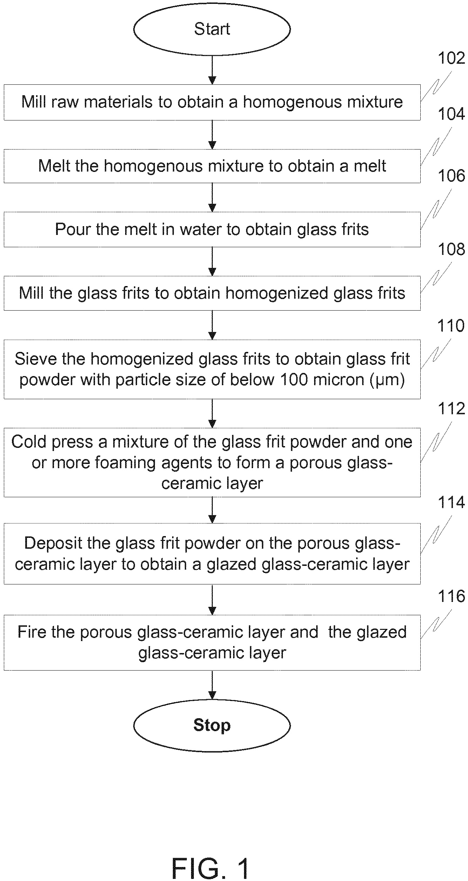

FIG. 1 illustrates a flow diagram of a method for preparing the white sintered glass-ceramic tile in accordance with the embodiments of the invention.

At step 102, the starting raw materials are milled to obtain a homogenous mixture. For example, the starting raw materials are ball milled in an agate jar for a period of about 30 minutes at a speed of about 300 rotations per minute (rpm) to obtain the homogenous mixture.

At step 104, the homogenous mixture is melted to obtain a melt. In an embodiment, the homogenized mixture is melted in kyanite refractory crucibles at a temperature of about 1400 degree Celsius (°C) to about 1450°C for a period of about 90 minutes in static air to obtain the melt.

At step 106, the melt is poured in water to obtain glass frits.

At step 108, the glass frits are milled to obtain homogenized glass frits. The glass frits are dried at a temperature of about 80°C for overnight and thereafter, ball milled for a period of 30 minutes at a speed of about 400 rpm to obtain the homogenized glass frits.

At step 110, the homogenized glass frits are sieved to obtain glass frit powder with particle size of below 100 $\mu$m. The particles with different sizes can also be used. However, particles size less than 100 $\mu$m provides an optimum balance between viscous flow sintering of glass and crystallization.

At step 112, a mixture of the glass frit powder and one or more foaming agents are cold pressed to obtain porous glass-ceramic layer. The amount of the one or more foaming agents used is about 0.5 wt % to about 5 wt % of the mixture. The one or more foaming agents can be selected from a group including carbon, silicon carbide (SiC) silicon nitride ($Si_3N_4$). Said foaming agent can preferably be combined with at least one compound selected from a group including manganese [IV] oxide ($MnO_2$), cerium [IV] oxide ($CeO_2$), iron [III] oxide ($Fe_2O_3$) and gypsum ($CaSO_4 \cdot 2H_2O$). Said compounds, such as manganese [IV] oxide ($MnO_2$), cerium [IV] oxide ($CeO_2$), iron [III] oxide ($Fe_2O_3$) and gypsum ($CaSO_4.2H_2O$), can be considered as oxidizers. They can advantageously provide a higher degree of foaming and/or a more homogeneous foaming in terms of cell size, when associated with at least one of said foaming agents. In a preferred embodiment, the foaming agent used is a mixture of $Si_3N_4$ and gypsum. The mixture is uniaxially pressed to obtain a porous glass-ceramic layer, which is a well-known process to a person skilled in the art of ceramic processing. For example, the mixture is uniaxially pressed at a pressure of about at 40 MPa to obtain the porous glass-ceramic layer. The porous glass-ceramic layer reduces heat capacity and thermal conductivity of the white sintered glass-ceramic tile.

At step 114, the glass frit powder is deposited on the porous glass-ceramic layer to obtain a glazed glass-ceramic layer. The glass frit powder is lightly cold pressed at a pressure of about 10 megapascal (MPa) to obtain the glazed glass-ceramic layer, which is a well-known process to a person skilled in the art of ceramic processing. The glazed glass-ceramic layer forms a glazed glass-ceramic layer of the white sintered glass-ceramic layer. The glazed glass-ceramic layer is represented by a functional engobe with a high albedo (i.e. with a high diffuse reflectivity or reflecting power). The glazed glass-ceramic layer acts as a reflective coating which reduces the temperature of the surface of the white sintered glass-ceramic tile under hot summer conditions by 4°C during the day, and by 2°C during the night. The surface of the white sintered glass-ceramic tile is warmer than the ambient air by only 2°C during the day and cooler than the ambient air by 5.9°C on an average during the night.

Finally, at step 116, the porous glass-ceramic layer and the glazed glass-ceramic layer is fired together. In an embodiment, the porous glass-ceramic layer and the glazed glass-ceramic layer is fired in air at a temperature of about 900°C to about 1100°C for a period of about 10 minutes to about 60 minutes, and more preferably for a period of about 10 minutes to about 30 minutes, with the heating rate of about 5 degree Celsius per minute (°C/min) to about 120°C/min.

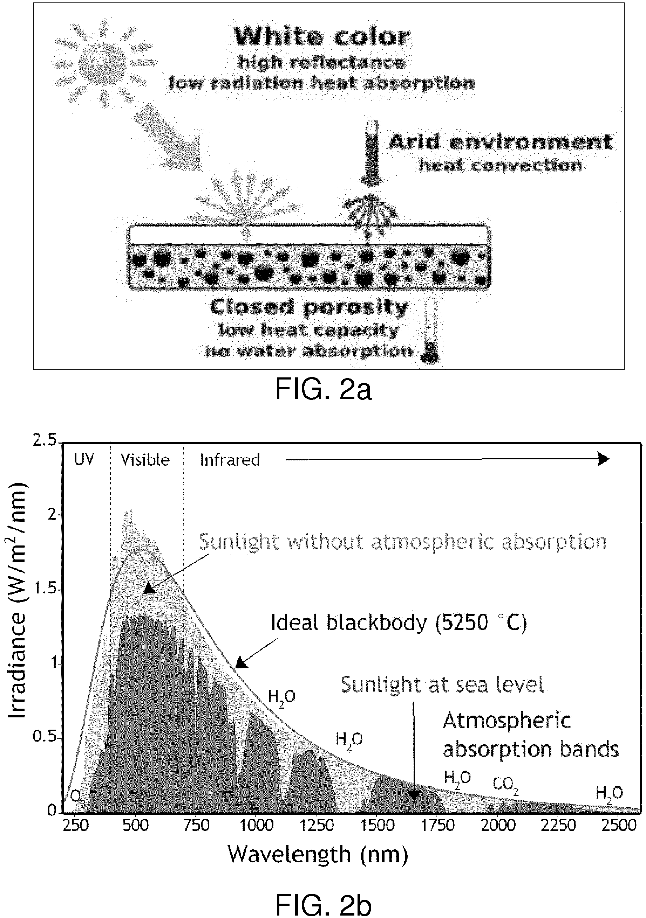

FIG. 2a represents a schematic representation of a white sintered glass-ceramic tile with a highly reflective coating deposited on a porous layer possessing a low thermal conductivity. FIG. 2b represents a spectrum of the solar radiation on the earth.

**Working example:**

In this working example, Neoparies™ glass-ceramics is used as a reference material. A glass (NP glass) with a chemical composition resembling that of Neoparies is reproduced using natural raw materials from Saudi Arabia and a limited amount of pure chemicals, as reported in Table 1 and Table 2. The pure chemicals are approximately 11 weight percentage (wt %), in the form of about 3 wt% of zinc oxide (ZnO), about 3wt% of borax and 5.4 wt% of potassium carbonate ($K_2CO_3$).

**Table 1**

| Oxides | NP glass | | Neoparies™ | |
|---|---|---|---|---|
| | (wt%) | (mol%) | (wt%) | (mol%) |
| Aluminum oxide ($Al_2O_3$) | 7.7 | 4.8 | 7.0 | 4.4 |
| Boron trioxide ($B_2O_3$) | 1.3 | 1.2 | 1.0 | 0.9 |
| Barium oxide (BaO) | 0.0 | 0.0 | 4.0 | 1.7 |
| Calcium oxide (CaO) | 20.3 | 22.8 | 17.1 | 19.6 |
| Ferric oxide ($Fe_2O_3$) | 0.4 | 0.1 | 0.0 | 0.0 |
| Potassium oxide ($K_2O$) | 2.5 | 1.7 | 2.0 | 1.4 |
| Magnesium oxide (MgO) | 0.7 | 1.1 | 0.0 | 0.0 |
| Sodium oxide ($Na_2O$) | 2.5 | 2.5 | 3.0 | 3.1 |
| Silicon dioxide ($SiO_2$) | 57.4 | 60.1 | 59.3 | 63.6 |
| Titanium dioxide ($TiO_2$) | 0.7 | 0.6 | 0.0 | 0.0 |
| Zinc oxide (ZnO) | 6.5 | 5.0 | 6.5 | 5.2 |

**Table 2**

| Starting Raw materials | Clay (wt%) | Cullet (wt%) | Limestone (wt%) | Silica (wt%) | Pure chemicals (wt%) |
|---|---|---|---|---|---|
| Amount in NP glass | 14.8 | 9.9 | 29.6 | 34.5 | 11.4 |

The chemical composition of the starting raw materials is evaluated using X-ray fluorescence. In NP glass, BaO is substituted by increasing CaO. $SiO_2$ is also slightly reduced.

The starting raw materials are first dried and homogenized by ball milling in an agate jar for 30 minutes at 300 rpm. After ball milling, the starting raw materials are melted in kyanite ($Al_2SiO_5$) refractory crucibles at 1400°C for 90 minutes in static air. The molten glass does not corrode the kyanite refractory crucibles. Thus, the chemical composition of the parent glass is not affected. After complete melting of the starting raw materials, the melt is poured into water to produce glass frits. A drastic quenching provides a number of fragments of the glass frits that are successively dried at temperature of 80°C overnight. After drying, the glass frits are ball milled and thereafter, sieved to obtain particles with a size below 90 $\mu$m. The ball milling of the glass frits is carried out for a time period of 30 minutes at a speed of about 400 rpm. A dilatometric and differential thermal analysis is performed both on powders below 90 $\mu$m and coarser particles (above 2-3 mm) to investigate the effect of the particle size on the crystallization behavior.

For the preparation of dense (glazed) samples, the pure glass frits are used whereas for the preparation of porous samples the foaming agents are added in the range 0.5 to 4 wt % with respect to the amount of dry glass frit. The mixtures are cold pressed in a 13 mm steel mold at a pressure of 40 MPa. The investigation of the evolution of the density of samples of white sintered glass-ceramic tiles is performed as a function of the amount of foaming agent added. Samples labeled SN includes only $Si_3N_4$ as foaming agent, samples labeled G3SN1 includes mixtures of $Si_3N_4$ and gypsum used as oxidizer in a molar ratio gypsum/$Si_3N_4$ of 3:1, and sample labeled G6SN1 includes mixtures of $Si_3N_4$ and gypsum in a molar ratio gypsum/$Si_3N_4$ of 6:1.

The water absorption, $W_{AB}$, apparent, $\rho_a$, bulk, $\rho_b$, densities of fired samples is evaluated according to the UNI EN ISO10545 norm, by means of the Archimedes method. The true density, $\rho_t$, is evaluated on powdered samples of size below 90 $\mu$m by means of helium gas pycnometer.

After selection of optimum compositions, larger samples are realized using 25 grams (g) of the dry glass frit powder uniaxially cold pressed in a steel mold of 50×50 mm2 at a pressure of 40 MPa. To obtain a porous glass-ceramic layer coated with the dense (glazed) glass-ceramic layer, 3 g of the dry glass frit powder is lightly pressed at 10 MPa. After lightly pressing of the dry glass frit powder, 22 g of the glass frits mixed with a selected a foaming agent is deposited on the lightly pressed dry glass frit powder. Thereafter, a layered sample is uniaxially pressed at 40 MPa. Finally, the produced samples are fired in air at 950°C for 30 minutes by applying the heating rate of 10°C/min.

The Young's modulus of the white sintered glass-ceramic samples is determined using a resonant frequency method in a flexural mode of vibration. Four-point bending tests (40 mm outer span and 20 mm inner span) is performed using an Instron 1121 UTS instrument on at least 15 specimens for each sample type, with dimensions of about 4 × 2.5 × 47 mm$^3$. In order to remove surface flaws, all samples are carefully polished to a 6 $\mu$m finish before testing, using abrasive papers and diamond paste. The edges of bars are beveled using fine abrasive papers and diamond paste. The cross-head speed is 1 mm/minute until a fracture. The double layered samples are tested by positioning the porous glass-ceramic layer on the compression (upper) side and the dense (glazed) glass-ceramic layer on the tensile (lower) side.

Ground glass-ceramics are investigated by powder X-ray diffraction, employing CuK$\alpha$ radiation (0.15418 nm) and collecting data in the range 2$\theta$ = 10-70° (0.05° steps and 5 seconds counting time). The identification is performed by means of a semiautomatic software package, supported by data from PDF-2 database. A selected dense (glazed) and polished sample is investigated using Vickers indentation, and the microhardness (HV) is assessed by averaging 20 indentations produced at low load (5N).

The polished surfaces of the samples are characterized by a scanning electron microscopy (SEM). The cell size distribution is evaluated from acquired SEM images using image processing software. The area of the cells, evaluated by means of the image processing software, is converted into the area of a circle of an equivalent surface. The values obtained by image analysis are converted to 3-Dimensional (3-D) values using a stereological equation $\varphi$sphere = $\varphi$circle/0.785, to determine the actual cell size.

The thermal diffusivity is evaluated on disks with 10 millimeter (mm) diameter and thickness of about 2 mm by a laser flash using a neodymium-glass laser operating at 1.053 $\mu$m. The laser delivers a standard pulse of 30 Joule (J) in 450 micro seconds ($\mu$s) and is used to heat up the front face of a cylindrical sample. The absorbed heat diffuses throughout the sample, and a liquid-nitrogen-cooled infrared detector (Hg-Cd-Te) is used to monitor the evolution of the back face temperature. The samples are coated with a thin graphite layer to increase the emissivity of receiving and emitting faces of the samples. The thermal diffusivity is calculated by using a Degiovanni's expression, which takes into account the heat losses from the samples during the experiment compared with a simpler Parker expression which only considers adiabatic conditions. The thermal diffusivity ($\alpha$) is measured perpendicular to the disk faces, and the thermal conductivity is then calculated by using the relation:

$$\lambda = \alpha \rho c$$

where $\rho$ is the bulk density and c is the specific heat of the material.

The reflectance is evaluated by means of a UV-V is a spectrophotometer equipped with integrating sphere (ISN-470). The white standard employed is a Barium sulfate ($BaSO_4$) plate.

**Results:**

The formation of specific crystal phases is beneficial for improved wear and chemical durability for materials that needs to be applied both as cladding and floor tiles. Neoparies are well-known for featuring such optimum phase assemblage, combined with a white color, for formulations that do not contain any pigments. In addition, Neoparies are developed by viscous flow sintering with concurrent crystallization ("sinter-crystallization") of glass powders, i.e. by a process in which the introduction of additives (foaming agents, reinforcing phases) is particularly simple.

For porous white sintered glass-ceramic samples, a variety of foaming agents are available and well-studied. However, only a few, such as $CeO_2$ and $Si_3N_4$, are suitable for generating porosity without affecting the final color. $CeO_2$ is already an effective foaming agent in porcelain stoneware, due to the reduction to CeO and oxygen gas evolution at a high temperature. However, the sintering temperature of Neoparies-like compositions is in the 950-1100°C range, well below the temperatures suitable for using $CeO_2$. Although $Si_3N_4$ are more expensive than $CeO_2$, $Si_3N_4$ can lead to gas generation in a desired temperature range. In particular, $Si_3N_4$ releases nitrogen gas and leaves silica residue when fired in an oxidizing environment even at temperatures as low as 800-850°C. The oxidation of $Si_3N_4$ is mainly attributed to the reaction with the environmental oxygen diffusing through the porosity available inside the pressed powders. During sintering, the permeability decreases and the environmental oxygen becomes insufficient to fully oxidize $Si_3N_4$. Therefore, gypsum is added to enhance the oxidation of $Si_3N_4$.

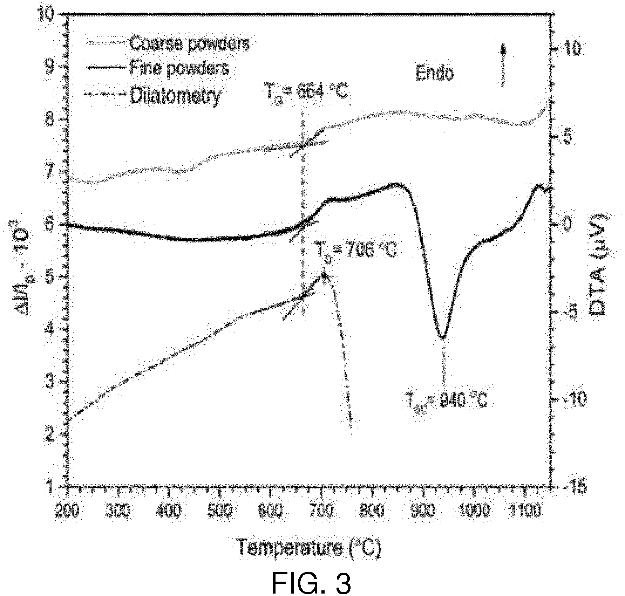

FIG. 3 represents a dilatometric plot, for a rod, and Differential Thermal Analysis (DTA) plots, for fine powders (below 90 $\mu$m) and coarse fragments (above 2-3 mm) of NP glass. The DTA plots for coarse and fine NP glass powders are in excellent agreement with the dilatometric plot for a NP glass rod. Thus, the graph shows that the glass transition temperature (TG) occurs at ~670°C. The coarse and fine glass powders remarkably differ from each other in term of the exothermic peak which is attributable to a crystallization event. The coarse glass powders do not exhibit any exothermic effect, whereas a large peak, centered at ~940°C (TSC, with SC standing for "surface-activated crystallization"), is present for the fine glass powders. Therefore, the data is a proof that a surface nucleation occurs which is the basis for the production of sintered glass-ceramics. Moreover, the crystallization occurs at a temperature higher than the dilatometric softening point (706°C), which is widely recognized as the minimum temperature at which significant sintering occurs by a viscous flow.

Considering the relatively large gap between the dilatometric softening point and the crystallization temperature (TSC-TD>200°C), the NP glass is expected to lead to dense (glazed) sinter-crystallized glass-ceramics when fired at TSC (rounded at 950°C). The verification of the expectation is carried out with samples from pure NP glass. The NP glass exhibits a bulk density of 2.56 $\pm$ 0.04 g/cm$^3$ after heat treatment at 950°C. The bulk density of the NP glass is close to the true density of 2.68 $\pm$ 0.02 g/cm$^3$, indicating that a residual porosity not exceeding 4.5 volume percentage (vol%) is present in the sample. The true density, pt, is not affected by the presence of the foaming agents and is 2.68 $\pm$ 0.02 g/cm3 for the set of samples analyzed.

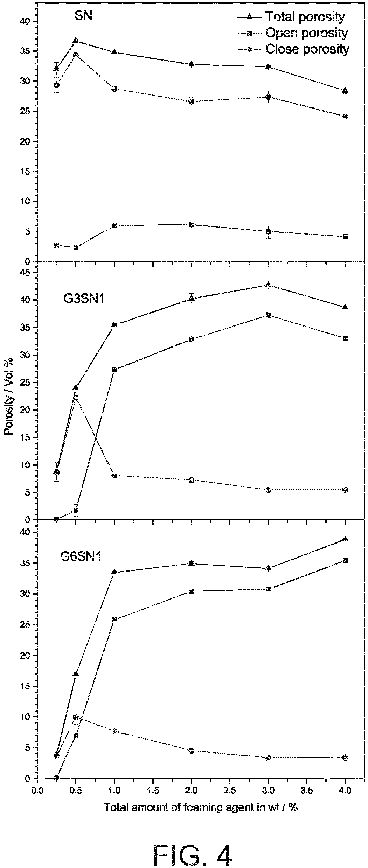

FIG. 4 represents a graph for total, open and close porosity of NP glass ceramic samples foamed using different foaming agents. The efficient foaming action of $Si_3N_4$ is observed in FIG. 4. At low amount such as, 0.25 wt%, $Si_3N_4$ generates a total porosity (TP) of 32 vol% that further increased to a peak value of 36.7 vol% for a 0.5 wt% of $Si_3N_4$ added. Higher percentages of $Si_3N_4$ increased the apparent viscosity of a glass phase, and thus a further expansion is limited. Although both samples with 0.25 or 0.5 wt% of $Si_3N_4$ possesses a density below 2 g/cm$^3$ and water absorption lower than 2 wt% (as shown in Table 3), the composition with the highest porosity is selected to manufacture a tile. Further the material properties are studied to produce samples with higher thermal insulation characteristics.

An enhancement of foaming is achieved by the addition of gypsum along with $Si_3N_4$. Gypsum completely dehydrates in the interval 120-180°C transforming into anhydrite [III] ($CaSO_4$). $CaSO_4$ decomposes into calcium oxide (CaO) and sulfur trioxide (S03) at a temperature above 1180°C. When coupled with a reducing agent, $CaSO_4$ may turn to calcium sulphite and sulphide, with release of oxygen. Such redox coupling is actually exploited for improving the oxidation of silicon carbide (SiC) in commercial glass foams. In analogy, $Si_3N_4$ is expected to be oxidized not only by reaction with atmospheric oxygen, but also by reaction with oxygen released from gypsum.

Both mixtures G3SN1 and G6SN1 formed a limited amount of porosity when the foaming agent is added in a small percentage (below 1 wt%). Thus, the introduction of $Si_3N_4$ needs to be sufficiently high to enable the generation of porosity. On performing some preliminary investigation, 0.5wt% to 2 wt% gypsum additions did not decrease the final density. Furthermore, in the G3SN1 and G6SN1 samples the role of gypsum is to oxidize $Si_3N_4$ particles. When the total amount of foaming agent is used in percentages of 0.25 or 0.5 wt%, only traces of $Si_3N_4$ are introduced. When 1 wt% and above of $Si_3N_4$ is used, the addition of gypsum in both formulations (samples G6SN1 and G3SN1) contributes to the expansion. The expansion leads to a total porosity higher than 40 vol %. However, the main effect of adding gypsum is to increase the amount of open porosity. The presence of the open porosity leads to high values for the water absorption (in some cases > 20 wt %), but the detrimental effect of the presence of the open porosity can be limited by application of a dense glaze on the tile surface.

After the preliminary tests, further studies are performed on larger samples selecting an amount of foaming agent of 0.5 wt% (SN sample) and 2 wt% (G3SN1 sample), respectively. The first sample is manufactured without applying a glaze, because of low water absorption of the first sample. The second sample possesses the highest amount of porosity. A mixture with 2 wt% of the foaming agent is preferred, in order to limit the amount of additive, as a sufficiently low density value is already obtained for that amount of the foaming agent. Due to high water absorption of the second sample, a glaze with the same composition of the body is applied to the second sample.

Table 3 provides water absorption ($W_{AB}$), bulk density ($\rho_b$) and apparent density ($\rho_a$) values for different mixtures where the samples are directly inserted in the furnace at 950°C and heated for 3 hours.

**Table 3**

| Sample | $Si_3N_4$ (wt%) | $W_{AB}$ (wt%) | $\rho_b$ (g/cm³) | $\rho_a$ (g/cm³) |
|---|---|---|---|---|
| **SN** | 0.25 | 1.5 ± 0.1 | 1.80 ± 0.03 | 1.85 ± 0.03 |
| | 0.50 | 1.4 ± 0.1 | 1.68 ± 0.01 | 1.72 ± 0.01 |
| | 1.00 | 3.5 ± 0.2 | 1.73 ± 0.02 | 1.84 ± 0.01 |
| | 2.00 | 3.5 ± 0.3 | 1.78 ± 0.00 | 1.90 ± 0.01 |
| | 3.00 | 2.8 ± 0.7 | 1.79 ± 0.00 | 1.89 ± 0.02 |
| | 4.00 | 2.2 ± 0.2 | 1.90 ± 0.01 | 1.98 ± 0.00 |
| **$G_6SN_1$** | 0.25 | 0.1 ± 0.1 | 2.55 ± 0.01 | 2.55 ± 0.01 |
| | 0.50 | 0.1 ± 0.0 | 2.38 ± 0.03 | 2.38 ± 0.03 |
| | 1.00 | 14.6 ± 0.0 | 1.76 ± 0.00 | 2.37 ± 0.01 |
| | 2.00 | 17.7 ± 0.2 | 1.72 ± 0.01 | 2.48 ± 0.00 |
| | 3.00 | 17.7 ± 0.0 | 1.74 ± 0.00 | 2.52 ± 0.00 |
| | 4.00 | 21.9 ± 0.2 | 1.62 ± 0.00 | 2.51 ± 0.00 |
| **$G_3SN_1$** | 0.25 | < 0.1 | 2.42 ± 0.05 | 2.42 ± 0.05 |
| | 0.50 | 0.9 ± 0.6 | 2.01 ± 0.04 | 2.05 ± 0.02 |
| | 1.00 | 16.0 ± 0.1 | 1.71 ± 0.01 | 2.35 ± 0.01 |
| | 2.00 | 20.8 ± 0.7 | 1.58 ± 0.03 | 2.36 ± 0.02 |
| | 3.00 | 24.5 ± 0.5 | 1.52 ± 0.01 | 2.42 ± 0.00 |
| | 4.00 | 20.3 ± 0.2 | 1.63 ± 0.01 | 2.43 ± 0.01 |

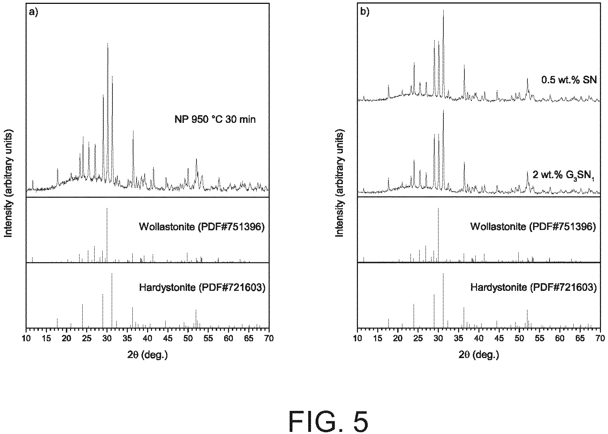

FIG. 5 represents X-Ray Powder Diffraction (XRD) patterns of a white sintered glass ceramic tile. FIG. 5a represents XRD patterns for dense (glazed) sample of the NP glass fired at a temperature of 950°C for a time period of 30 minutes. FIG. 5b represents XRD patterns for cellular glass ceramics sample of the NP glass foamed using different foaming agents and sintered at a temperature of 950°C for a time period of 30 minutes. As determined by the XRD analysis, a controlled surface crystallization of β-wollastonite ($CaSiO_3$ PDF #751396) and hardystonite ($ca_2ZnSi_2O_7$ PDF #721603) occurs after heating at 950°C for 30 minutes. The presence of residual glass is also evident from the patterns. Hardystonite is part of the melilite group crystal structures of general formula $X_2YZ_2O_7$, where X is $Ca^{2+}$ or $Na^+$, Y is $Mg^{2+}$, $Zn^{2+}$, $Al^{3+}$, or $B^{3+}$, and Z sites are a combination of $B^{3+}$, $Al^{3+}$ and $Si^{4+}$. Based on the chemistry of the studied glass-ceramic, ion substitutions probably occurred in the hardystonite crystals with $Al^{3+}$ and $B^{3+}$ occupying the Y and Z sites. By comparing the relative intensity of the diffraction peaks of β-wollastonite and hardystonite, the porous samples present a higher hardystonite to β-wollastonite ratio. A reason for the higher hardystonite to β-wollastonite ratio is that the pores favor the heterogeneous nucleation of hardystonite. No evidence of $Si_3N_4$ or $CaSO_4$ traces is found in the XRD patterns. Thus, the decomposition/reaction products of the introduced additives are dissolved in the glass ceramic.

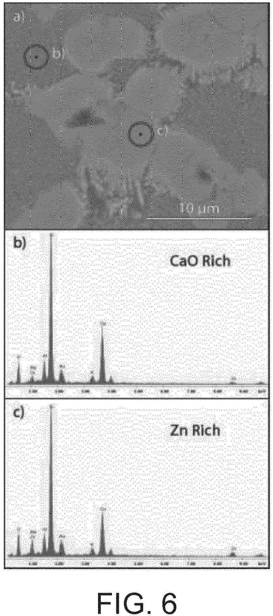

FIG. 6 represents Scanning Electron Microscopy with Energy Dispersive X-ray Spectroscopy (SEM-EDS) microanalysis of a dense (glazed) NP glass sample after firing at a temperature of 950°C for a time period of 30 minutes. FIG. 6a depicts a Back Scattered Image (BEI) showing a phase separation. FIG. 6b represents EDS microanalysis of the darker region, showing Zn depletion and higher Ca content. FIG. 6c represents EDS microanalysis of the lighter region, showing Ca depletion and a higher Zn content. FIG. 6 shows nucleation and growth of hardystonite and wollastonite crystals in regions richer in Zn or Ca, respectively.

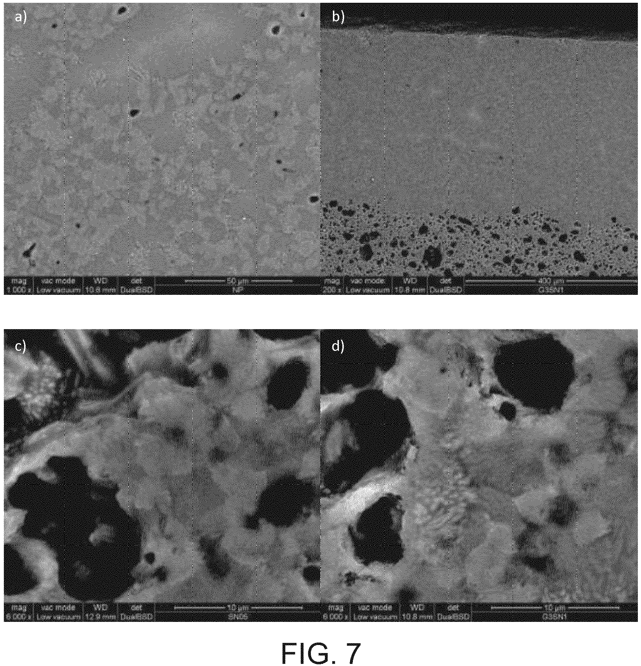

FIG. 7a depicts BEI a top view of the dense (glazed) glass ceramics. FIG. 7a shows the formation of the hardystonite-rich and wollastonite-rich regions. A residual total porosity of 4.5 vol % is calculated from the $\rho_b$ and $\rho_t$ density.

FIG. 7b depicts a cross section of the glaze applied to a foamed layer in sample $G_3SN_1$. FIG. 7b depicts a perfect integration between the dense (glazed) coating applied on a porous layer realized by adding 2 wt% of the foaming agent containing gypsum (sample G3SN1). FIG. 7c depicts details of the microstructure of sample SN, and FIG. 7d depicts details of the microstructure of a foamed layer of sample $G_3SN_1$. FIGS. 7c and 7d show that the same crystalline microstructure found in the bulk material is also present in struts of the porous samples.

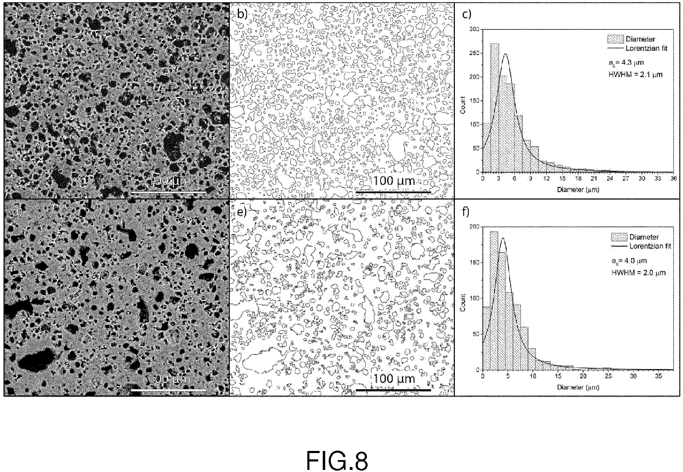

FIGS. 8a and 8d depict BEI at low magnification used to evaluate the cell size distribution of SN and G3SN1 porous samples. FIGS. 8b and 8e depict outlines of the cells after image processing. FIGS. 8c and 8f is a histogram plot of the cell size and Lorentzian fit to evaluate the cell size distribution. Differently from pure glass foams, the cellular glass-ceramics present a low sphericity of the cells, as reported in FIG. 8. The equivalent cell-size (diameter) distribution is evaluated by fitting processed data with Lorentzian curves by means of image analysis, as reported in FIGS. 8c and 8f. The Lorentzian curves peak at 4.3 and 4.0 μm for the samples foamed using different foaming agents (samples SN and G3SN1, respectively), indicating that the cell size distributions of the samples are nearly equivalent. However, sample G3SN1 possesses a lower porosity resulting in a density of 1.94 g/cm$^3$ which is higher than that of sample SN that had a density of 1.85 g/cm$^3$. The difference in the density values, reported in Table 3 and Table 4, is originated by the different heat treatment applied.

In fact, the samples reported in Table 3 are produced by directly inserting the samples in a kiln, whereas the samples reported in Table 4 are obtained by applying a heating rate of 10°C/min. The heating rate affected both density and water absorption, in fact differently to samples G3SN1. Sample SN had a water absorption value higher than 2 wt %. Thus, the water absorption values indicate that an application of a glaze is considered for both the mixtures to protect the porous layer.

Although the bending strength of bars cut from the tiles of the dense (glazed) samples is considerably higher, the porous glass ceramics possessed mechanical properties similar to that of dense (glazed) commercial sinter-crystallized glass ceramics of similar composition. In particular, the porous samples had a high strength associated with a density decreased by about 25% to 28% with respect to the dense (glazed) samples. Thus, the glazed side prevents the water absorption considering the negligible absorption displayed by the dense (glazed) sample. For the dense (glazed) samples, the total residual porosity, evaluated by gas pycnometry, is of 4.5 vol%.

Table 4 provides bulk density ($\rho_b$), elastic modulus (€), bending strength (σ) and hardness (HV) of dense (glazed) and porous glass ceramic tiles where the samples are heated at the rate of 10°C/min to 950°C and for a time period of about 3 hours at 950°C.

**Table 4**

| Sample | $\rho_b$ (g/cm$^3$) | € (GPa) | σ (MPa) | HV (GPa) | $W_{ab}$ (wt%) |
|--------|------|------|------|------|------|
| NP | 2.56 ± 0.04 | 80 ± 3 | 97 ± 8 | 6.7 ± 0.3 | <0.2 |
| SN | 1.85 ± 0.05 | 39 ± 2 | 58 ± 6 | - | 3.1 |
| $G_3SN_1$ | 1.94 ± 0.02 | 49 ± 2 | 61 ± 6 | - | 1.9 |

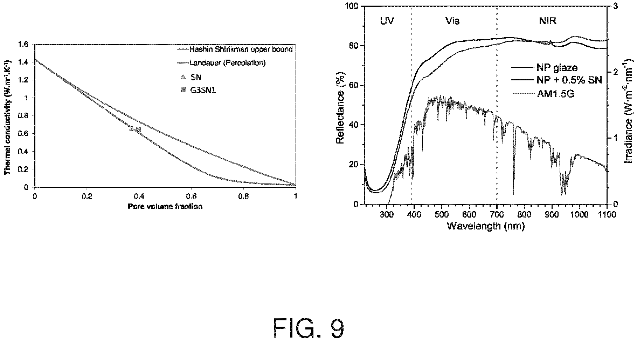

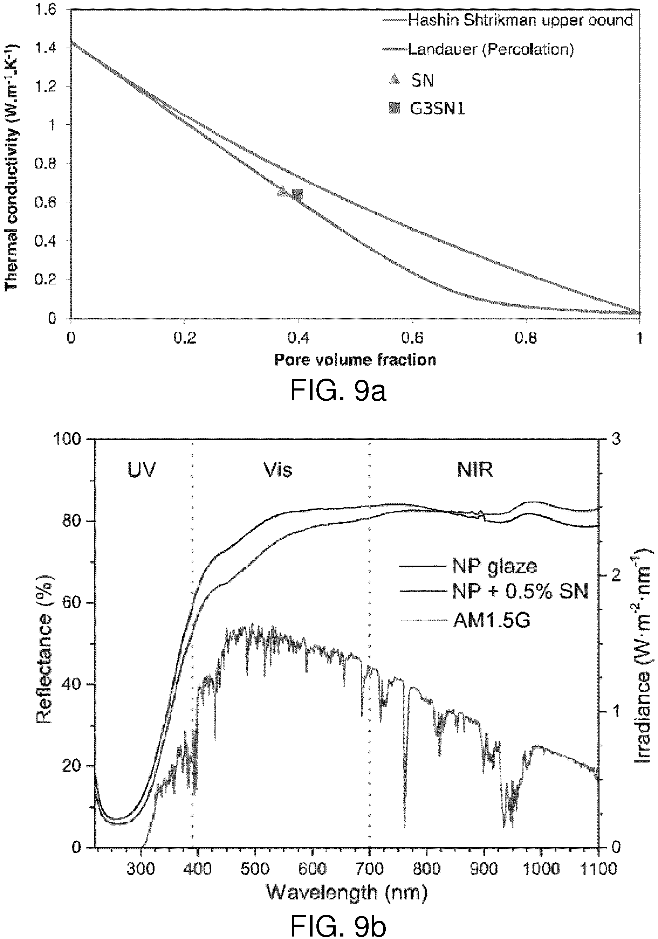

FIG. 9a represents a graph with thermal conductivity at room temperature as a function of the pore volume fraction. The values calculated with the Hashin-Shtrikman upper bound and Landauer expressions are compared. FIG. 9b represents UV-Vis-NIR spectra for dense (glazed) and foamed SN samples, and AM 1.5 Global solar irradiance according to the ASTM G173 standard. The Standard Reference Spectra ASTM Global reported in FIG. 9b displays the simulated spectral irradiance AM 1.5 Global of sun light for a 37° tilted surface, and is herewith used to show the wavelengths interval where the sun light is the most intense. In fact, to reduce the heat absorption from the sunlight, reduction of both the absorption from the visible light range (390-700 nm) and from the near infrared (NIR 750-1400 nm) is of fundamental importance. FIG. 9b shows the reflectance values of a dense (glazed) NP and a porous SN sample without the glaze layer applied. The porosity slightly decreases the reflectance as a result of light scatterin. A clear absorption of the UV radiation is due to the small band gap of the non-bridging oxygen present in the glass network and due to the modifiers introduced in the glass-ceramic composition. The reflectance is quite high in the visible and near infrared regions where the greatest fraction of the solar irradiance power is distributed.

Various embodiments of the invention provide a white colored glass-ceramic tile with assured high reflectance in the visible region. The high density of scattering centers provided by the crystal phases limits the heat absorption from the incoming visible sun light producing a greater reflectance and a higher opacity. The high reflectance coupled to the low thermal conductivity indicates that the white sintered porous glass ceramic tiles are suitable to be employed as an advanced barrier to heat. Thus, an efficient thermal insulation is provided for buildings constructed using the white sintered porous glass ceramic tiles. Thus, the absorbance of thermal radiations is reduced and the demand on cooling power is reduced. The white sintered glass-ceramic with low thermal conductivity also mitigates summer urban heat islands, and in turn lower the citywide ambient air temperature and increase human comfort. The application of the glaze further improves the reflectance of the material, prevents the incorporation of dust and water. Thus, a longer durability is favored due to application of the glaze. Furthermore, the porous tiles can be applied as cladding materials for improved building insulation due to the lightweight and the high albedo, whereas the lightweight materials can also be used for paving due to the high strength. The while sintered glass-ceramic tiles with a low thermal conductivity can also compete with wood for paving, providing an improved thermal insulation between the ground or different floors in a building and even for a higher comfort when walking barefoot. The higher thermal conductivity of the dense (glazed) tiles limits the benefits for thermal insulation applications. However, the dense (glazed) tiles can be used for paving when strength requirements are more important than the thermal insulation properties.

Those skilled in the art will realize that the above recognized advantages and other advantages described herein are merely exemplary and are not meant to be a complete rendering of all of the advantages of the various embodiments of the invention.

In the foregoing specification, specific embodiments of the invention have been described. However, one of ordinary skill in the art appreciates that various modifications and changes can be made without departing from the scope of the invention as set forth in the claims below. Accordingly, the specification is to be regarded in an illustrative rather than a restrictive sense, and all such modifications are intended to be included within the scope of the invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

**Claims**

1. A single fired white sintered glass-ceramic tile with a low thermal conductivity, the tile comprising:

    a glazed glass-ceramic layer; and
    a porous glass-ceramic layer, wherein starting raw materials are same for the glazed glass-ceramic layer and the porous glass-ceramic layer, wherein starting raw materials are selected from one of:

    13 weight percentage (wt%) to 17 wt% of clay, 8 wt% to 12 wt% of cullet, 28 wt% to 32 wt% of limestone, 33 wt% to 37 wt% of silica and 8 wt% to 12 wt% pure chemicals; and
    0 wt% to 4 wt% of alumina, 8 wt% to 14 wt% of cullet, 15 wt% to 24 wt% of feldspar, 19 wt% to 32 wt% of limestone, 5 wt% to 14 wt% of magnesia, 25 wt% to 31 wt% of silica, and 3 wt% to 7wt% of zinc oxide.

2. A method of preparing a white sintered glass-ceramic tile, the method comprising:

    milling starting raw materials to obtain a homogenous mixture, wherein the starting raw materials are selected from one of:

    13 weight percentage (wt%) to 17 wt% of clay, 8 wt% to 12 wt% of cullet, 28 wt% to 32 wt% of limestone, 33 wt% to 37 wt% of silica and 8 wt% to 12 wt% pure chemicals; and
    0 wt% to 4 wt% of alumina, 8 wt% to 14 wt% of cullet, 15 wt% to 24 wt% of feldspar, 19 wt% to 32 wt% of limestone, 5 wt% to 14 wt% of magnesia, 25 wt% to 31 wt% of silica, and 3 wt% to 7wt% of zinc oxide;

melting the homogenous mixture to obtain a melt;
pouring the melt in water to obtain glass frits;
milling the glass frits to obtain homogenized glass frits;
sieving the homogenized glass frits to obtain glass frit powder with particle size of below 100 micron ($\mu$m);
cold pressing a mixture of the glass frit powder and at least one foaming agent to form a porous glass-ceramic layer;
depositing the glass frit powder on the porous glass-ceramic layer to obtain a glazed glass-ceramic layer; and
firing the porous glass-ceramic layer and the glazed glass-ceramic layer.

3. The method according to claim 2, wherein the amount of the at least one foaming agent used is 0.5 wt% to 5 wt% of the mixture.

4. The method according to claim 2, wherein the at least one foaming agent is selected from a group comprising carbon, silicon carbide (SiC) and silicon nitride ($Si_3N_4$), said foaming agent being combined with at least one compound selected from a group comprising manganese [IV] oxide ($MnO_2$), cerium [IV] oxide ($CeO_2$), iron [III] oxide ($Fe_2O_3$) and gypsum.

5. The method according to claim 2, wherein the white sintered glass-ceramic is fired in air at a temperature of 900 °C to 1100°C for a period of 10 minutes to 60 minutes with the heating rate of 5°C/minute to 120°C/minute.

```
                        ┌─────────────┐
                        │    Start    │
                        └──────┬──────┘
                               │                              102
                               ▼
        ┌──────────────────────────────────────────────┐
        │  Mill raw materials to obtain a homogenous mixture │
        └──────────────────────┬───────────────────────┘
                               │                              104
                               ▼
        ┌──────────────────────────────────────────────┐
        │  Melt the homogenous mixture to obtain a melt   │
        └──────────────────────┬───────────────────────┘
                               │                              106
                               ▼
        ┌──────────────────────────────────────────────┐
        │  Pour the melt in water to obtain glass frits   │
        └──────────────────────┬───────────────────────┘
                               │                              108
                               ▼
        ┌──────────────────────────────────────────────┐
        │  Mill the glass frits to obtain homogenized glass frits │
        └──────────────────────┬───────────────────────┘
                               │                              110
                               ▼
        ┌──────────────────────────────────────────────┐
        │  Sieve the homogenized glass frits to obtain glass frit │
        │  powder with particle size of below 100 micron (μm) │
        └──────────────────────┬───────────────────────┘
                               │                              112
                               ▼
        ┌──────────────────────────────────────────────┐
        │  Cold press a mixture of the glass frit powder and one │
        │  or more foaming agents to form a porous glass- │
        │  ceramic layer │
        └──────────────────────┬───────────────────────┘
                               │                              114
                               ▼
        ┌──────────────────────────────────────────────┐
        │  Deposit the glass frit powder on the porous glass- │
        │  ceramic layer to obtain a glazed glass-ceramic layer │
        └──────────────────────┬───────────────────────┘
                               │                              116
                               ▼
        ┌──────────────────────────────────────────────┐
        │  Fire the porous glass-ceramic layer and  the glazed │
        │  glass-ceramic layer │
        └──────────────────────┬───────────────────────┘
                               │
                               ▼
                        ┌─────────────┐
                        │    Stop     │
                        └─────────────┘
```

# FIG. 1

FIG. 2a

FIG. 2b

FIG. 3

FIG. 4

FIG. 5

FIG. 6

FIG. 7

FIG.8

FIG. 9

FIG. 9a

FIG. 9b

Europäisches
Patentamt

European
Patent Office

Office européen
des brevets

# EUROPEAN SEARCH REPORT

Application Number

EP 16 19 2303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/174126 A1 (BINHUSSAIN MOHAMMED A [SA] ET AL) 26 June 2014 (2014-06-26) | 1-3,5 | INV. C03C1/00 |
| Y | * Fig. 3, 5; [0002]-[0005], [0016], [0018], [0019], [0021], [0041]-[0056], [0069], [0071] * | 1-5 | C03C3/083 C03C3/085 C03C3/091 C03C3/093 |
| Y | US 4 054 435 A (SAKANE TAKASHI ET AL) 18 October 1977 (1977-10-18) * col. 1, l. 59-col. 3, l. 14, l. 41-col. 4, l. 21, table: ex. No. 1-20; claim 4 * | 1-5 | C03C8/02 C03C8/04 C03C10/00 C03C11/00 C03B19/08 |
| Y | DE 42 22 079 A1 (SCHAUMGLAS GMBH DEUTSCHE [DE]) 5 January 1994 (1994-01-05) * col. 1, l. 24-27 * | 4 | C03B32/02 E04C2/54 |
| Y | Gerhard Bayer: "North-Holland Publishing Company FOAMING OF BOROSILICATE GLASSES BY CHEMICAL REACTIONS RANGE 950 -I150°C", Journal of Non-Crystalline Solids, 1 January 1980 (1980-01-01), pages 855-860, XP055224558, Retrieved from the Internet: URL:http://www.sciencedirect.com/science/article/pii/002230938090544X/pdf?md5=6680aa660c07e1a361e0678a83423a02&pid=1-s2.0-002230938090544X-main.pdf * p. 855, paragraph "Introduction"-p. 856, 3. paragraph; p. 860, paragraph "Conclusions" * | 4 | |
| | | | **TECHNICAL FIELDS SEARCHED (IPC)** |
| A | JP H05 238766 A (MITSUBISHI HEAVY IND LTD; CHORYO ENG) 17 September 1993 (1993-09-17) * abstract * | 1-5 | C03C C03B E04C |
| A | US 3 975 174 A (CAMERLINCK PIERRE) 17 August 1976 (1976-08-17) * col. 1, l. 19-col. 2, l. 47 * | 1-5 | |

The present search report has been drawn up for all claims

| Place of search | Date of completion of the search | Examiner |
|---|---|---|
| Munich | 13 April 2017 | Deckwerth, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 2303

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2017

| Patent document cited in search report | | Publication date | Patent family member(s) | | Publication date |
|---|---|---|---|---|---|
| US 2014174126 | A1 | 26-06-2014 | EP<br>US | 2749544 A1<br>2014174126 A1 | 02-07-2014<br>26-06-2014 |
| US 4054435 | A | 18-10-1977 | NONE | | |
| DE 4222079 | A1 | 05-01-1994 | AT<br>DE<br>EP | 124024 T<br>4222079 A1<br>0579990 A1 | 15-07-1995<br>05-01-1994<br>26-01-1994 |
| JP H05238766 | A | 17-09-1993 | NONE | | |
| US 3975174 | A | 17-08-1976 | NONE | | |

EPO FORM P0459